(19) Europäisches Patentamt
European Patent Office
Office européen des brevets

(11) EP 2 942 419 A1

(12) **EUROPEAN PATENT APPLICATION**
published in accordance with Art. 153(4) EPC

(43) Date of publication:
**11.11.2015 Bulletin 2015/46**

(21) Application number: **14760750.1**

(22) Date of filing: **28.02.2014**

(51) Int Cl.:
*C23C 2/02* [(2006.01)]    *C21D 1/76* [(2006.01)]
*C21D 9/46* [(2006.01)]    *C22C 38/00* [(2006.01)]
*C22C 38/04* [(2006.01)]    *C23C 2/06* [(2006.01)]
*C23C 2/28* [(2006.01)]    *C22C 18/04* [(2006.01)]
*C22C 38/58* [(2006.01)]

(86) International application number:
**PCT/JP2014/001108**

(87) International publication number:
**WO 2014/136417 (12.09.2014 Gazette 2014/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **05.03.2013   JP 2013042854**

(71) Applicant: **JFE Steel Corporation
Tokyo 100-0011 (JP)**

(72) Inventors:
• **MAKIMIZU, Yoichi
Tokyo 100-0011 (JP)**
• **SUZUKI, Yoshitsugu
Tokyo 100-0011 (JP)**
• **NAGATAKI, Yasunobu
Tokyo 100-0011 (JP)**

(74) Representative: **Hoffmann Eitle
Patent- und Rechtsanwälte PartmbB
Arabellastraße 30
81925 München (DE)**

(54) **HIGH-STRENGTH HOT-DIP GALVANIZED STEEL SHEET AND PROCESS FOR MANUFACTURING SAME**

(57)    A high-strength galvanized steel sheet whose base steel is a high-strength steel sheet containing Si, Mn, and B and which has good coating adhesiveness and a production method therefor are provided.

A base steel sheet containing Si, Mn, and B is oxidized at a heating temperature of steel sheet T that satisfies formula below, and then subjected to reduction-annealing and galvanizing.

$$T \geq 58.65 \times [Si] + 29440 \times [B] - 13.59 \times [O_2] + 548.1$$

[Si]: amount of Si in the steel on a mass percent basis
[B]: amount of B in the steel on a mass percent basis
[$O_2$]: $O_2$ concentration on a volume percent basis in an atmosphere at oxidizing treatment

## FIG. 1

**Description**

Technical Field

The present invention relates to a high-strength galvanized steel sheet whose base steel is a high-strength steel sheet containing Si, Mn, and B and a method for producing the high-strength galvanized steel sheet.

Background Art

In recent years, coated steel sheets produced by imparting corrosion resistance to base steel sheets, in particular, galvanized steel sheets or alloyed galvanized steel sheets having good corrosion resistance, are used in the fields of automobiles, home electric appliances, construction materials, etc. From the viewpoints of improving automobile fuel efficiency and automobile collision safety, the strength of automobile body materials is desirably increased and the thickness decreased, and the weight of automobile bodies is desirably decreased and the strength increased. Thus, use of high-strength steel sheets in automobile body materials has been encouraged.

Typically, a galvanized steel sheet is produced by using, as a base steel sheet, a thin steel sheet prepared by hot-rolling or further cold-rolling a slab, and recrystallization-annealing and galvanizing the base steel sheet in a CGL. The galvanized steel sheet may be further subjected to an alloying treatment after galvanizing.

Addition of Si and Mn is effective for increasing strength of steel sheet. However, during annealing, Si and Mn undergo oxidation even in a reducing $N_2 + H_2$ atmosphere that does not cause oxidation of Fe (that reduces Fe oxides), and oxides of Si and Mn are formed on the outermost surface of steel sheet. Since the oxides of Si and Mn decrease wettability between molten zinc and base steel sheet during galvanizing treatment, coating defects frequently occur in the steel sheet containing Si and Mn. Even if the coating defects do not occur, a problem of poor coating adhesiveness arises.

Patent Literature 1 discloses a method for producing a galvanized steel sheet whose base steel is a high-strength steel sheet having a high Si content. According to this method, reduction-annealing is performed after formation of oxide films on the base steel sheet surface. However, the effect is instable according to Patent Literature 1. Patent Literatures 2 to 8 disclose methods aimed at stabilizing the effect by specifying oxidation speed or reduction amount, or by actually measuring oxide film thickness in an oxidation zone and controlling the oxidation conditions and reduction conditions based on the measured results.

Regarding a galvanized steel sheet whose base steel sheet is a high strength steel sheet containing Si and Mn, Patent Literature 9 specifies the amounts of Si-containing oxides in the coating layer and the base steel sheet of an alloyed galvanized steel sheet. Patent Literature 10 discloses a galvanized steel sheet and an alloyed galvanized steel sheet in which the amounts of the Si-containing oxides in the coating layer and the base steel sheet are specified as in Patent Literature 9. Patent Literature 11 specifies the contents of Si and Mn that take form of oxides in the coating layer.

Citation List

Patent Literature

PTL 1: Japanese Unexamined Patent Application Publication No. 55-122865
PTL 2: Japanese Unexamined Patent Application Publication No. 4-202630
PTL 3: Japanese Unexamined Patent Application Publication No. 4-202631
PTL 4: Japanese Unexamined Patent Application Publication No. 4-202632
PTL 5: Japanese Unexamined Patent Application Publication No. 4-202633
PTL 6: Japanese Unexamined Patent Application Publication No. 4-254531
PTL 7: Japanese Unexamined Patent Application Publication No. 4-254532
PTL 8: Japanese Unexamined Patent Application Publication No. 7-34210
PTL 9: Japanese Unexamined Patent Application Publication No. 2006-233333
PTL 10: Japanese Unexamined Patent Application Publication No. 2007-211280
PTL 11: Japanese Unexamined Patent Application Publication No. 2008-184642

## Summary of Invention

Technical Problem

According to the methods for producing a galvanized steel sheet described in Patent Literatures 1 to 8, since Si oxides are formed on the steel sheet surface during continuous annealing, sufficient coating adhesiveness is not always achieved.

According to the production methods described in Patent Literatures 9 to 11, galvanized steel sheets exhibit good fatigue resistance but alloyed galvanized steel sheets sometimes fail to exhibit sufficient fatigue resistance. Patent Literatures 9 and 10 are directed to improving wettability and phosphatability and do not consider fatigue resistance.

The present invention has been made under the aforementioned circumstances and aims to provide a high-strength galvanized steel sheet whose base steel is a high-strength steel sheet containing Si, Mn, and B and which has good coating adhesiveness, and a method for producing the high-strength galvanized steel sheet. The invention also aims to provide an alloyed high-strength galvanized steel sheet having good fatigue resistance and a method for producing the alloyed high-strength galvanized steel sheet. Solution to Problem

As discussed above, addition of solution-strengthening elements such as Si and Mn is effective for increasing strength of steel sheet. It is also known that addition of B improves hardenability of steel sheet and causes a good strength-ductility balance even in a high-strength steel sheet. In particular, high-strength steel sheets used in automobile applications strongly require improvement of strength-ductility balance since press-forming is performed. However, it has been found that when B is added to steel sheet together with Si, oxidation reaction of Si is accelerated on the steel sheet surface during annealing.

Extensive studies have been conducted and it has been found that in the case where a high-strength steel sheet containing Si, Mn, and B is used as a base steel sheet, controlling the heating temperature of the base steel sheet and the oxygen concentration in an oxidation treatment based on the Si and B contents causes formation of iron oxides enough for suppressing the oxidation reaction of Si on the steel sheet surface and that a high-strength galvanized steel sheet having stable good coating adhesiveness without coating defects can be obtained.

Moreover, in general, oxidizing treatment is conducted to obtain good coating adhesiveness and oxides of Si and Mn are formed in the steel sheet surface layer after reduction-annealing. However, it has been found that when oxides of Si and Mn remain in the steel sheet surface layer under the coating layer after alloying treatment, cracks start to propagate from the oxides and thus fatigue resistance is degraded.

The present invention has been made based on these findings and has following features.

[1] A method for producing a high-strength galvanized steel sheet, comprising;
oxidizing a base steel sheet containing Si, Mn, and B at a heating temperature of steel sheet T°C that satisfies formula (1) below,
reduction-annealing the oxidized base steel sheet, and galvanizing the reduction-annealed base steel sheet.

$$T \geq 58.65 \times [Si] + 29440 \times [B] - 13.59 \times [O_2] + 548.1 \cdots (1)$$

[Si]: content of Si in the base steel sheet on a mass percent basis
[B]: content of B in the base steel sheet on a mass percent basis
[$O_2$]: $O_2$ concentration on a volume percent basis in an atmosphere at oxidizing treatment

[2] The method for producing a high-strength galvanized steel sheet according to [1], further comprising; after galvanizing, performing an alloying treatment at a temperature of 460°C to 600°C for 10 to 60 seconds.

[3] The method for producing a high-strength galvanized steel sheet according to [1] or [2], wherein the base steel sheet has a composition containing, on a mass percent basis, C: 0.01 to 0.20%, Si: 0.1 to 2.0%, Mn: 1.0 to 3.0%, B: 0.0005 to 0.005%, and the balance being Fe and unavoidable impurities.

[4] A high-strength galvanized steel sheet produced by the method according to [1] or [3], wherein, in the base steel sheet surface layer having a thickness of 5 $\mu$m under the coating layer, an amount of Si oxides is 0.05 g/m$^2$ or more on a Si basis and an amount of Mn oxides is 0.05 g/m$^2$ or more on a Mn basis.

[5] A high-strength galvanized steel sheet produced by the method according to [2] or [3], wherein, in the coating layer, an amount of Si oxides is 0.05 g/m$^2$ or more on a Si basis and an amount of Mn oxides is 0.05 g/m$^2$ or more on a Mn basis, and in the base steel sheet surface layer having a thickness of 5 $\mu$m under the coating layer, an amount of Si oxides is 0.01 g/m$^2$ or less on a Si basis and an amount of Mn oxides is 0.01 g/m$^2$ or less on a Mn basis.

In the present invention, "high-strength galvanized steel sheet" means galvanized steel sheet having a tensile strength TS of 440 MPa or more. The high-strength galvanized steel sheet of the present invention may be a cold-rolled steel sheet or a hot-rolled steel sheet. For the purposes of the present invention, a zinc-coated steel sheet obtained by galvanizing is referred to as a galvanized steel sheet irrespective of whether the galvanized steel sheet has been subjected to an alloying treatment or not. In other words, in the present invention, a galvanized steel sheet not subjected to an alloying treatment and a galvanized steel sheet subjected to an alloying treatment are both referred to as a galvanized steel sheet. Advantageous Effects of Invention

According to the present invention, a high-strength galvanized steel sheet whose base steel is a high-strength steel sheet containing Si, Mn, and B and which exhibits good coating adhesiveness can be obtained. A high-strength galvanized steel sheet subjected to an alloying treatment also exhibits good fatigue resistance.

Brief Description of Drawings

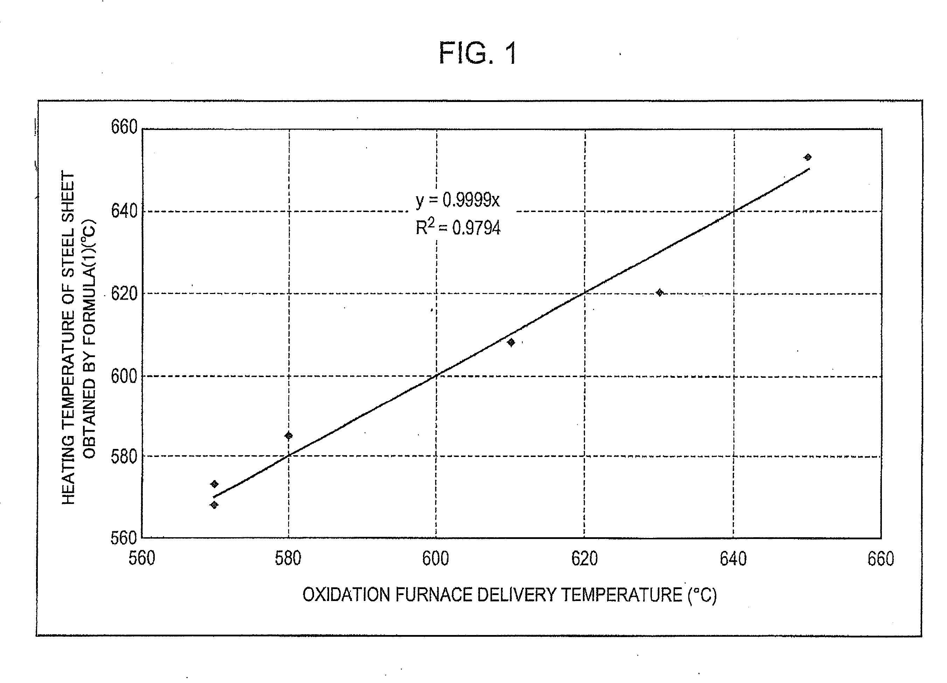

[Fig. 1] Fig. 1 is a graph showing the relationship between oxidation furnace delivery temperature and heating temperature of steel sheet obtained by formula (1). Description of Embodiments

The present invention will now be specifically described.

First, an oxidizing treatment that precedes an annealing step is described. As mentioned above, adding Si, Mn, etc., to steel is effective for increasing strength of steel sheet. However, when a steel sheet containing such elements is annealed prior to galvanizing, Si and Mn oxides are formed on the steel sheet surface and it becomes difficult to ensure coatability due to the presence of Si and Mn oxides on the steel sheet surface.

Studies have found that changing the conditions of annealing prior to galvanizing so as to induce oxidation of Si and Mn inside the steel sheet and prevent oxidation of Si and Mn on the steel sheet surface will improve coatability, increase the reactivity between the coating layer and the steel sheet, and improve the coating adhesiveness.

In order to induce oxidation of Si and Mn inside the steel sheet and prevent oxidation of Si and Mn on the steel sheet surface, it is effective to perform an oxidizing treatment prior to the annealing step and then perform reduction-annealing, galvanizing, and, if needed, an alloying treatment. It has also been found that a particular amount or more of iron oxides must be obtained by the oxidizing treatment. However, in a Si-containing steel, oxidation is suppressed during the oxidizing treatment because of the increased Si content, and thus, it is difficult to obtain a required amount of iron oxides. It has also been found that incorporation of B accelerates oxidation of Si on the steel sheet surface during the annealing step and thus the required amount of iron oxides obtained in the oxidizing treatment is further increased.

In view of the above, an idea of specifying the oxidation furnace delivery temperature, that is, the heating temperature of steel sheet, and the oxygen concentration in the atmosphere based on the Si and B contents in order to optimize the oxidizing treatment and obtain the required amount of oxides has been conceived.

Steel sheets with different Si contents and B contents were used to investigate the oxygen concentration in the oxidation furnace atmosphere and the oxidation furnace delivery temperature that can achieve good coating adhesiveness. The results are shown in Table 1.

[Table 1]

| Steel Sheet No. | Si content in steel sheet (mass%) | Mn content in steel sheet (mass%) | B content in steel sheet (mass%) | $O_2$ concentration in oxidation furnace atmosphere (vol%) | Oxidation furnace delivery temperature at which good coating adhesiveness is obtained (°C) | Average heating rate in oxidation furnace (°C/sec) |
|---|---|---|---|---|---|---|
| A | 0.3 | 2.5 | 0.003 | 0.1 | 650 | 15 |
| B | 0.5 | 2.5 | 0.0015 | 1.0 | 610 | 14 |
| C | 0.5 | 2.5 | 0.0015 | 0.1 | 630 | 15 |
| D | 1.5 | 2.6 | 0.0015 | 2.0 | 650 | 15 |
| E | 0.15 | 2.3 | 0.001 | 0.1 | 580 | 15 |
| F | 0.8 | 1.9 | 0 | 2.0 | 570 | 15 |
| G | 0.45 | 1.5 | 0 | 0.1 | 570 | 15 |

The evaluation method for coating adhesiveness is the same as that described in Examples below. Multi regression analysis was conducted to analyze the influence of Si content, B content, and oxygen concentration in the oxidation furnace atmosphere on the oxidation furnace delivery temperature (heating temperature of steel sheet). As a result, formula (1) below was found.

$$T \geq 58.65 \times [Si] + 29440 \times [B] - 13.59 \times [O_2] + 548.1$$

$$\cdots (1)$$

T: heating temperature of steel sheet in °C in oxidizing treatment, [Si]: amount of Si in the steel sheet on a mass percent basis, [B]: amount of B in the steel sheet on a mass percent basis, and [$O_2$]: $O_2$ concentration on a volume percent basis in the atmosphere inside the oxidation furnace.

Comparison of the oxidation furnace delivery temperature described in Table 1 and the heating temperature of steel sheet obtained by formula (1) above is shown in Fig. 1. The coefficient of correlation $R^2$ is about 0.98 and this shows a significantly high correlation. The coefficient related to the B content is a particularly large value and this shows that although B is an additional trace element, B has a large influence and is a particularly important factor for determining oxidation conditions.

In view of the above, in the present invention, an oxidizing treatment is to be conducted at a heating temperature of steel sheet T that satisfies formula (1) described above. As discussed above, the foremost feature of the present invention is specifying oxidation conditions by taking the influence of B into account and this is an important requirement. When the temperature is increased to a temperature that satisfies formula (1) in the oxidation furnace before the annealing step, that is, when the heating temperature of steel sheet is T, a high-strength steel sheet containing Si and B exhibits good coating adhesiveness. However, excessive oxidation causes detachment of iron oxides in a reducing atmosphere furnace in the subsequent reduction-annealing step and leads to pick-up. Accordingly, the heating temperature of steel sheet T at oxidizing treatment is preferably 850°C or lower. Since a required amount of iron oxides are formed on the steel sheet surface once the temperature of steel sheet reaches the heating temperature that satisfies formula (1), there is no need to hold that temperature. However, when the temperature of steel sheet is increased at a significantly high rate, the subsequent reduction-annealing process begins before a required amount of iron oxides are formed. Thus, the average heating rate at oxidizing treatment is preferably 50 °C/sec or less. From the production efficiency viewpoint, the average heating rate at oxidizing treatment is preferably 1 °C/sec or more.

The atmosphere in the oxidation furnace at oxidizing treatment has the oxygen concentration controlled as described above. The oxidation concentration at oxidizing treatment satisfying formula (1) is preferably 0.05% or more. At a concentration less than 0.05%, a sufficient amount of iron oxides are not always obtained although formula (1) is satisfied. The oxygen concentration is preferably 0.05% or more to stably obtain a sufficient amount of iron oxides. A satisfactory effect can be obtained as long as the oxygen concentration and the temperature of steel sheet are within the prescribed ranges even when the atmosphere contains $N_2$, CO, $CO_2$, $H_2O$, and unavoidable impurities.

The type of the oxidation furnace used to perform the oxidizing treatment is not particularly limited but a direct heating furnace equipped with direct burners is preferably used. The direct heating heats a steel sheet by directly applying burner flame onto the steel sheet surface, the burner flame being created by burning a mixture of air and fuel such as coke oven gas (COG) which is a by-product gas of steel-making plant. Since the direct heating offers a higher steel sheet heating rate than radiation heating, the direct heating is advantageous in that the heating furnace length can be decreased and the line speed can be increased. In the case where the air ratio of the direct heating is adjusted to 0.95 or higher to increase the ratio of the air to the fuel, unburned oxygen remains in the flame and can accelerate oxidation of steel sheet. Thus, the oxygen concentration of the atmosphere can be controlled by adjusting the air ratio. Examples of the fuel for the direct heating include COG and liquefied natural gas (LNG).

The steel sheet after the above-described oxidizing treatment is subjected to reduction-annealing. The conditions of reduction-annealing are not particularly limited. The atmosphere gas introduced into the annealing furnace preferably contains 1 to 20% by volume of $H_2$ with the balance being $N_2$ and unavoidable impurities, which is a typical atmosphere. If the $H_2$ concentration in the atmosphere gas is less than 1% by volume, there is not enough $H_2$ to reduce iron oxides on the steel sheet surface. At a concentration exceeding 20% by volume, reduction of iron oxides saturates and the excess $H_2$ is wasted. Moreover, oxidation caused by $H_2O$ in the furnace occurs excessively at a dew point exceeding 0°C, and excessive internal oxidation of Si occurs. Thus, the dew point is preferably 0°C or lower. In this manner, an iron-reducing atmosphere is created inside the annealing furnace and iron oxides generated by the oxidizing treatment are reduced. During this process, some oxygen atoms separated from iron oxides by reduction diffuse into the interior of the steel sheet and react with Si and Mn, thereby causing internal oxidation of Si and Mn. Oxidation of Si and Mn inside the steel sheet decreases the amounts of Si oxides and Mn oxides on the steel sheet surface that comes into contact with a molten coating material and thus the coating adhesiveness is improved.

Reduction-annealing is preferably performed at a steel sheet temperature of 700°C to 900°C from the viewpoint of mechanical properties controlling. The soaking time is preferably 10 to 300 seconds.

After reduction-annealing, the steel sheet is cooled to a temperature of 440°C to 550°C and then galvanized. The galvanizing treatment is conducted by using a coating bath having a molten Al content of 0.12 to 0.22% by mass if the coating layer is not to be alloyed, and by using a coating bath having a molten Al content of 0.08 to 0.18% by mass if the coating layer is to be alloyed. The steel sheet having a temperature of 440°C to 550°C is dipped in the coating bath and the coating weight is adjusted by gas wiping or the like. The coating bath temperature is 440°C to 500°C. If the alloying treatment is to be performed, the galvanized steel sheet is preferably heated at 460°C to 600°C for 10 to 60 seconds. At a temperature exceeding 600°C, coating adhesiveness is deteriorated. At a temperature lower than 460°C, alloying does not proceed.

If the alloying treatment is to be conducted, the degree of alloying (Fe content (%) in the coating layer) is adjusted to 7 to 15% by mass. When the degree of alloying is less than 7% by mass, alloying occurs unevenly, appearance is degraded, and slidability is degraded due to generation of $\zeta$ phases. When the degree of alloying exceeds 15% by mass, a large amount of hard and brittle $\Gamma$ phases generate and coating adhesiveness is degraded.

A high-strength galvanized steel sheet of the present invention is produced by the process described above.

A high-strength galvanized steel sheet produced by the above-described method is described next. Note that in the description below, the unit of the content of the respective elements of the steel composition and the respective elements in the coating layer composition is "% by mass" and "%" is used to denote % by mass unless otherwise noted.

First, a preferable steel composition is described.

C: 0.01 to 0.20%

Carbon (C) induces formation of microstructure such as martensite and thus improves formability. The C content is preferably 0.01% or more for this purpose. At a C content exceeding 0.20%, however, weldability is degraded. Thus, the C content is preferably 0.01% or more and 0.20% or less.

Si: 0.1 to 2.0%

Silicon (Si) is an element effective for strengthening steel. At a Si content less than 0.1%, expensive alloying elements will be needed to obtain high strength, which is not preferable economically. At a Si content exceeding 2.0%, the heating temperature of steel sheet that satisfies formula (1) becomes high and thus operational problems may arise. Accordingly, the Si content is preferably 0.1% or more and 2.0% or less.

Mn: 1.0 to 3.0%

Manganese (Mn) is an element effective for increasing strength of steel. Mn content of 1.0% or more is preferable to ensure strength. At a Mn content exceeding 3.0%, it may be difficult to obtain good weldability and good balance between strength and ductility. Accordingly, the Mn content is preferably 1.0% or more and 3.0% or less.

B: 0.0005 to 0.005%

Boron (B) is an element effective for improving hardenability of steel. At a B content less than 0.0005%, it is difficult to obtain a hardening effect. At a B content exceeding 0.005%, the oxidation furnace delivery temperature that satisfies formula (1) becomes high and thus operational problems may arise. Accordingly, the B content is preferably 0.0005% or more and 0.005% or less.

In order to control the balance between strength and ductility, at least one element selected from Al: 0.01 to 0.1%, Mo: 0.05 to 1.0%, Nb: 0.005 to 0.05%, Ti: 0.005 to 0.05%, Cu: 0.05 to 1.0%, Ni: 0.05 to 1.0%, and Cr: 0.01 to 0.8% may be added if needed.

In the case where these elements are to be added, the reasons for limiting the optimum contents are as follows.

Aluminum (Al) is thermodynamically most readily oxidizable and undergoes oxidation before Si and Mn. Thus, Al has an effect of suppressing oxidation of Si and Mn on the steel sheet surface and accelerating oxidation of Si and Mn inside the steel sheet. This effect is obtained at an Al content of 0.01% or more. At an Al content exceeding 0.1%, the cost increases. Accordingly, the Al content is preferably 0.01% or more and 0.1% or less.

At a Mo content less than 0.05%, the effect of adjusting strength and the effect of improving coating adhesiveness exhibited when Mo is added together with Nb, Ni, or Cu are not easily obtained. At a Mo content exceeding 1.0%, the cost increases. Accordingly, the Mo content is preferably 0.05% or more and 1.0% or less.

At a Nb content less than 0.005%, the effect of adjusting strength and the effect of improving coating adhesiveness exhibited when Nb is added together with Mo are not easily obtained. At a Nb content exceeding 0.05%, the cost increases. Accordingly, the Nb content is preferably 0.005% or more and 0.05% or less.

At a Ti content less than 0.005%, the effect of adjusting strength is not easily obtained. At a Ti content exceeding 0.05%, coating adhesiveness may be degraded. Accordingly, the Ti content is preferably 0.005% or more and 0.05% or less.

At a Cu content less than 0.05%, the effect of accelerating formation of retained $\gamma$ phases and the effect of improving coating adhesiveness exhibited when Cu is added together with Ni or Mo are not easily obtained. At a Cu content exceeding 1.0%, the cost may increase. Accordingly, the Cu content is preferably 0.05% or more and 1.0% or less.

At a Ni content less than 0.05, the effect of accelerating formation of retained $\gamma$ phases and the effect of improving coating adhesiveness exhibited when Ni is added together with Cu or Mo are not easily obtained. At a Ni content exceeding 1.0%, the cost may increase. Accordingly, the Ni content is preferably 0.05% or more and 1.0% or less.

At a Cr content less than 0.01%, it is difficult to obtain hardenability and the balance between strength and ductility may be degraded. At a Cr content exceeding 0.8%, the cost increases. Accordingly, the Cr content is preferably 0.01% or more and 0.8% or less.

The balance is Fe and unavoidable impurities.

Next, internal oxides of Si and Mn formed after reduction-annealing, galvanizing, and if needed, alloying treatment that follow the oxidizing treatment are described.

Typically, a galvanized steel sheet is produced by annealing a base steel sheet in a reducing atmosphere, dipping the base steel sheet in a zinc coating bath to conduct galvanizing, withdrawing the galvanized steel sheet from the zinc coating bath, and adjusting the coating weight by using gas wiping nozzles. If needed, an alloying treatment is performed in an alloying heating furnace to alloy the coating layer. In order to increase strength of the galvanized steel sheet, addition of Si, Mn, B, etc., to the base steel sheet is effective as mentioned above. However, during the annealing process, Si and Mn added to the steel sheet form oxides on the steel sheet surface and it becomes difficult to obtain good coating adhesiveness. In contrast, according to the present invention, an oxidizing treatment is conducted before reduction-annealing and under oxidation conditions suitable for the Si and B contents so as to oxidize Si and Mn inside the steel sheet and prevent oxidation of Si and Mn on the steel sheet surface. As a result, the coatability is improved, the reactivity between the coating layer and the steel sheet can be increased, and the coating adhesiveness can be improved. In a galvanized steel sheet not subjected to an alloying treatment, internal oxides that include Si and Mn oxides formed during reduction-annealing remain inside the steel sheet under the coating layer. However, in a galvanized steel sheet subjected to an alloying treatment, Fe-Zn alloying reaction proceeds from the interface between the coating layer and the steel sheet and thus the internal oxides diffuse into the coating layer. Thus, it is believed that the amount of internal oxides in the steel sheet surface layer under the coating layer relates to coating adhesiveness for a galvanized steel sheet not subjected to an alloying treatment and the amount of internal oxides contained in the coating layer relates to coating adhesiveness for a galvanized steel sheet subjected to an alloying treatment.

The inventors of the present invention have focused on the oxides present in the steel sheet under the coating layer and the oxides present in the coating layer, and studied the relationship between the coating adhesiveness and the oxides of Si and Mn. It has been found that a galvanized steel sheet not subjected to an alloying treatment exhibits good coating adhesiveness when the amount of Si oxides and the amount of Mn oxides contained in the steel sheet surface layer having a thickness of 5 $\mu$m under the coating layer are each 0.05 g/m$^2$ or more and that a galvanized steel sheet subjected to an alloying treatment exhibits good coating adhesiveness when the amount of Si oxides and the amount of Mn oxides contained in the coating layer are each 0.05 g/m$^2$ or more. In the case where the amount of the Si oxides and the amount of Mn oxides are each less than 0.05 g/m$^2$, the state of the steel sheet surface before galvanizing is presumably such that Si and Mn exist as oxides on the steel sheet surface without undergoing internal oxidation and this state is detrimental to obtaining good coating adhesiveness. In the case where the requirement of the present invention is met for only one of Si and Mn, presumably only that element undergoes internal oxidation and the other element exists as oxides on the steel sheet surface and adversely affects the coatability and coating adhesiveness. Accordingly, both Si and Mn need to undergo internal oxidation. The feature of the present invention is that the amount of Si oxides and the amount of Mn oxides in the aforementioned region are each 0.05 g/m$^2$ or more, which is an important requirement. The upper limits of the amount of Si oxides and the amount of Mn oxides are not particularly specified. Since advantageous effects saturate above 1.0 g/m$^2$, the upper limits are preferably 1.0 g/m$^2$. The amount of Si oxides, which is 0.05 g/m$^2$ or more, is on a Si basis. The amount of Mn oxides, which is 0.05 g/m$^2$ or more, is on a Mn basis. The amounts of Si oxides and Mn oxides can be measured by the method described in Examples below.

It has also been found that fatigue resistance of an alloyed galvanized steel sheet has a close correlation with the amounts of Si oxides and Mn oxides in the steel sheet surface layer under the coating layer. It has been found that fatigue resistance is improved when the amount of Si oxides and the amount of Mn oxides in the steel sheet surface layer having a thickness of 5 $\mu$m under the coating layer are each 0.01 g/m$^2$ or less. Although the mechanism with which fatigue resistance is improved by controlling the amount of oxides in the steel sheet surface layer under the coating layer of the alloyed galvanized steel sheet is not exactly clear, it is believed that oxides in this region serve as starting points of cracks attributable to fatigue. It is believed that when oxides that serve as starting points of cracks are present, cracks readily occur under tensile stress since the alloyed galvanized steel sheet has a hard and brittle coating layer. The cracks propagate from the coating surface layer to the interface between the coating layer and the steel sheet. When oxides are present in the steel sheet surface layer having a thickness of 5 $\mu$m under the coating layer, cracks propagate further due to the oxides serving as starting points. In contrast, when the amount of Si oxides and the amount of Mn oxides in the steel sheet surface layer having a thickness of 5 $\mu$m are each 0.01 g/m$^2$ or less, presumably the cracks in the coating layer do not propagate into the interior of the steel sheet, and thus fatigue resistance is improved.

The production method used to induce oxides in such a state is not particularly limited. The state of oxides can be controlled by controlling the steel sheet temperature and treatment time in the alloying treatment. In the case where the steel sheet temperature is low or the treatment time is short, the Fe-Zn alloying reaction progresses insufficiently from the interface between the coating layer and the steel sheet and thus the amount of oxides remaining on the steel sheet surface layer is increased. Thus, a steel sheet temperature and a treatment time needed to obtain sufficient Fe-Zn alloying reaction must be ensured. Preferably, as discussed above, the alloying treatment is performed at a steel sheet temperature of 460°C to 600°C for a treatment time of 10 to 60 seconds.

A galvanized steel sheet not subjected to an alloying treatment exhibits good fatigue resistance even when the amount of Si and the amount of Mn in the oxides contained in the steel sheet surface layer having a thickness of 5 $\mu$m under the coating layer are each 0.01 g/m$^2$ or more. The coating layer of the galvanized steel sheet is not alloyed and is substantially purely composed of zinc. Thus, compared to the coating layer of the galvanized steel sheet subjected to an alloying treatment, the coating layer of the galvanized steel sheet not subjected to an alloying treatment has high ductility. Accordingly, cracks do not occur under tensile stress and presumably thus the influence of the oxides present in the steel sheet surface layer under the coating layer is not significant.

EXAMPLE 1

Steels having compositions shown in Table 2 were melted and formed into slabs, and the slabs were hot-rolled, pickled, and cold-rolled to prepare cold-rolled steel sheets having a thickness of 1.2 mm.

[Table 2]

|  |  |  |  |  |  | (mass%) |
|---|---|---|---|---|---|---|
| Steel | C | Si | Mn | B | P | S |
| A | 0.01 | 0.2 | 2.0 | 0.001 | 0.06 | 0.003 |
| B | 0.08 | 0.25 | 1.5 | 0.001 | 0.03 | 0.001 |
| C | 0.06 | 0.15 | 2.3 | 0.001 | 0.02 | 0.001 |
| D | 0.11 | 0.8 | 1.9 | 0.0015 | 0.01 | 0.001 |
| E | 0.10 | 0.75 | 2.0 | 0.006 | 0.01 | 0.001 |
| F | 0.09 | 0.15 | 2.3 | 1 0.001 | 0.01 | 0.001 |
| G | 0.08 | 1.5 | 2.6 | 0.0015 | 0.01 | 0.001 |
| H | 0.09 | 2.2 | 1.5 | 0.0015 | 0.01 | 0.001 |
| I | 0.08 | 0.3 | 2.5 | 0.003 | 0.01 | 0.001 |
| J | 0.12 | 0.5 | 2.5 | 0.0015 | 0.01 | 0.001 |
| K | 0.06 | 0.3 | 3.2 | 0.001 | 0.01 | 0.001 |

The cold-rolled steel sheets were oxidized by heating while changing the oxidation furnace delivery temperature of a DFF-type oxidation furnace in a CGL. COG was used as a fuel for the direct burner and the air ratio was adjusted to adjust the oxygen concentration in the atmosphere. The oxidation furnace delivery temperature was measured with a radiation thermometer. Then the steel sheets were reduction-annealed in a reduction zone at 850°C for 20 seconds and galvanized in a 460°C zinc bath having an Al content adjusted to 0.19%. Then the coating weight was adjusted to about 50 g/m$^2$ by gas wiping.

The galvanized steel sheets obtained as above were analyzed to find the amounts of Si oxides and Mn oxides in the base steel sheet surface layer having a thickness of 5 $\mu$m under the coating layer. Appearance and coating adhesiveness were also evaluated. Tensile properties and fatigue resistance were also investigated.

The methods for measurement and evaluation were as follows:

Amounts of Si oxides and Mn oxides

The coating layer of the galvanized steel sheet obtained as above was dissolved in hydrochloric acid containing inhibitors and the base steel sheet surface layer having a thickness of 5 $\mu$m was dissolved in a non-aqueous solution by constant-current electrolysis. The residues of the oxides obtained were filtered through a nuclepore filter having 50 nm pores. The oxides captured by the filter were analyzed by ICP after alkali fusion, and the amounts of Si and Mn were determined.

Appearance

Samples with no coating defects in appearance were rated as having good appearance (○ marks) and samples with coating defects in appearance were rated as having poor appearance (X marks).

Coating adhesiveness

A ball impact test was conducted. The formed portion was detached by using an adhesive tape. Whether detachment of the coating layer occurred was observed with naked eye. ○ marks: No detachment of the coating layer was observed. X marks: Detachment of the coating layer was observed.

Tensile properties

A JIS No. 5 test piece was subjected to the tensile test according to JIS Z 2241 in which the rolling direction was the tensile direction.

Fatigue resistance

A fatigue resistance test was conducted at a stress ratio R of 0.05. The fatigue limit (FL) was determined after $10^7$ repeating cycles and the endurance ratio (FL/TS) was determined. Samples with an endurance ratio of 0.60 or more were rated as having good fatigue resistance. The stress ratio R is the value defined by (minimum cyclic stress)/(maximum cyclic stress).

The results are shown in Table 3 along with the production conditions.

[Table 3]

| Steel Sheet No. | Steel | Oxidation furnace delivery temperature T (°C) | $O_2$ concentration in oxidation furnace (%) | Evaluation *1 | Amount of Si in oxides contained in base steel sheet surface layer having a thickness of 5 μm ($g/m^2$) | Amount of Mn in oxides contained in base steel sheet surface layer having a thickness of 5 μm ($g/m^2$) | Appearance | Coating adhesiveness | Tensile strength (MPa) | Fatigue limit (MPa) | Endurance ratio | |
|---|---|---|---|---|---|---|---|---|---|---|---|---|
| 1 | A | 600 | 0.1 | ○ | 0.055 | 0.078 | ○ | ○ | 458 | 360 | 0.79 | Example |
| 2 | A | 600 | 0.5 | ○ | 0.063 | 0.081 | ○ | ○ | 463 | 340 | 0.73 | Example |
| 3 | B | 600 | 0.5 | ○ | 0.065 | 0.075 | ○ | ○ | 611 | 420 | 0.69 | Example |
| 4 | B | 580 | 0.1 | × | 0.042 | 0.048 | ○ | × | 599 | 380 | 0.63 | Comparative Example |
| 5 | C | 620 | 0.1 | ○ | 0.071 | 0.055 | ○ | ○ | 798 | 520 | 0.65 | Example |
| 6 | D | 630 | 0.1 | × | 0.028 | 0.039 | ○ | × | 785 | 500 | 0.64 | Comparative Example |
| 7 | D | 630 | 1.0 | ○ | 0.057 | 0.063 | ○ | ○ | 810 | 530 | 0.65 | Example |
| 8 | D | 670 | 1.0 | ○ | 0.075 | 0.081 | ○ | ○ | 805 | 540 | 0.67 | Example |
| 9 | E | 700 | 2.0 | × | 0.105 | 0.090 | × | × | 808 | 530 | 0.66 | Comparative Example |
| 10 | F | 600 | 1.0 | ○ | 0.053 | 0.070 | ○ | ○ | 1003 | 700 | 0.70 | Example |
| 11 | F | 600 | 0.1 | ○ | 0.051 | 0.073 | ○ | ○ | 994 | 650 | 0.65 | Example |
| 12 | G | 680 | 2.0 | ○ | 0.111 | 0.131 | ○ | ○ | 1011 | 650 | 0.64 | Example |
| 13 | G | 640 | 2.0 | × | 0.031 | 0.054 | ○ | × | 984 | 700 | 0.71 | Comparative Example |
| 14 | G | 650 | 1.0 | × | 0.038 | 0.051 | × | × | 982 | 670 | 0.68 | Comparative Example |
| 15 | H | 700 | 2.0 | ○ | 0.087 | 0.055 | ○ | ○ | 1020 | 660 | 0.65 | Example |
| 17 | I | 680 | 0.1 | ○ | 0.071 | 0.088 | ○ | ○ | 1206 | 830 | 0.69 | Example |
| 18 | J | 640 | 1.0 | ○ | 0.075 | 0.094 | ○ | ○ | 1184 | 840 | 0.71 | Example |
| 19 | J | 680 | 0.5 | ○ | 0.067 | 0.074 | ○ | ○ | 1213 | 860 | 0.71 | Example |
| 20 | K | 600 | 0.5 | ○ | 0.072 | 0.113 | ○ | ○ | 1257 | 800 | 0.64 | Example |

Underlined items are outside the scope of the present invention.

*1: T ≥ 58.65 · [Si] + 29440 · [B] - 13.59 · [$O_2$] + 548.1: ○
T < 58.65 · [Si] + 29440 · [B] - 13.59 · [$O_2$] + 548.1: ×
[Si], [B]: amounts of Si and B in steel on mass% basis.
[$O_2$]: $O_2$ concentration on volume percent basis in atmosphere inside oxidation furnace

Table 3 shows that the galvanized steel sheets (Examples) produced by the present invention method have good coating adhesiveness, good coating appearance, and good fatigue resistance although they are high-strength steel sheets containing Si, Mn, and B. In contrast, the galvanized steel sheets (Comparative Examples) produced outside the scope of the present invention method have poor coating adhesiveness and/or poor coating appearance.

EXAMPLE 2

Steels having compositions shown in Table 2 were melted and formed into slabs, and the slabs were hot-rolled, pickled, and cold-rolled to prepare cold-rolled steel sheets having a thickness of 1.2 mm.

The cold-rolled steel sheets were subjected to an oxidation treatment and reduction-annealing as in Example 1. The steel sheets were galvanized in a 460°C zinc bath having an Al content adjusted to 0.13%. Then the coating weight was adjusted to about 50 g/m² by gas wiping. An alloying treatment was conducted at temperatures shown in Table 4 for 20 to 30 seconds.

The Fe content in the coating layer of each of the galvanized steel sheets obtained as above was determined. The amount of Si oxides and the amount of Mn oxides contained in the coating layer and in the base steel sheet surface layer having a thickness of 5 $\mu$m under the coating layer were determined, and appearance and coating adhesiveness were evaluated. Tensile properties and fatigue resistance were also investigated.

The methods for measurement and evaluation were as follows:

Amount of Fe contained (Fe content)

The coating layer of the galvanized steel sheet obtained as above was dissolved in hydrochloric acid containing inhibitors and the coating weight was determined from the difference in mass between before and after dissolution. The Fe content in the coating layer was determined from the amount of Fe contained in hydrochloric acid.

Amounts of Si oxides and Mn oxides

The coating layer was dissolved in a non-aqueous solution by constant-potential electrolysis and then the base steel sheet surface layer having a thickness of 5 $\mu$m was dissolved in a non-aqueous solution by constant-current electrolysis. The residues of the oxides obtained after each dissolution step were filtered through a nuclepore filter having 50 nm pores. The oxides captured by the filter were analyzed by ICP after alkali fusion, and the amounts of Si and Mn in the oxides contained in the coating layer and in the steel sheet surface layer having a thickness of 5 $\mu$m under the coating layer were determined.

Appearance

Appearance after the alloying treatment was observed with naked eye. Samples with no alloying unevenness and/or no coating defects were indicated by ○ marks and samples with alloying unevenness and/or coating defects were indicated by X marks.

Coating adhesiveness

Cellotape (registered trade mark) was attached to the galvanized steel sheet and the surface to which the tape was attached was bent at 90° and unbent. The amount of detachment per unit length was measured by X-ray fluorescence through Zn count, and samples rated rank 1 to 3 according to the standard below were evaluated as good (○ marks) and samples rated rank 4 or higher were evaluated as poor (X marks).

| X-ray fluorescence count | Rank |
|---|---|
| 0 or more and less than 500: | 1 (Good) |
| 500 or more and less than 1000: | 2 |
| 1000 or more and less than 2000: | 3 |
| 2000 or more and less than 3000: | 4 |
| 3000 or more: | 5 (Poor) |

Tensile properties and fatigue resistance were evaluated as in Example 1.

The results are shown in Table 4 along with the production conditions.

[Table 4]

| Steel Sheet No. | Steel | Oxidation furnace delivery temperature T (°C) | $O_2$ concentration in oxidation furnace (%) | Evaluation *1 | Alloying temperature (°C) | Fe content in coating layer (mass%) | Aappearance | Amount of Si in oxides in coating layer $(g/m^2)$ | Amount of Mn in oxides in coating layer $(g/m^2)$ | Coating adhesiveness | Amount of Si in oxides contained in base steel sheet surface layer having a thickness of 5 μm $(g/m^2)$ | Amount of Mn in oxides contained in base steel sheet surface layer having a thickness of 5 μm $(g/m^2)$ | Tensile strength (MPa) | Fatigue limit (MPa) | Endurance ratio | |
|---|---|---|---|---|---|---|---|---|---|---|---|---|---|---|---|---|
| 21 | A | 600 | 0.1 | O | 490 | 9.6 | O | 0.051 | 0.072 | O | 0.004 | 0.006 | 448 | 330 | 0.74 | Example |
| 22 | A | 600 | 0.5 | O | 490 | 10.1 | O | 0.055 | 0.081 | O | 0.008 | 0.001 | 458 | 320 | 0.70 | Example |
| 23 | B | 600 | 0.5 | O | 500 | 11.0 | O | 0.057 | 0.070 | O | 0.008 | 0.005 | 599 | 480 | 0.80 | Example |
| 24 | B | 580 | 0.1 | × | 500 | 10.5 | O | 0.040 | 0.044 | × | 0.002 | 0.004 | 581 | 360 | 0.62 | Comparative Example |
| 25 | C | 620 | 0.1 | O | 500 | 9.5 | O | 0.066 | 0.051 | O | 0.005 | 0.004 | 792 | 500 | 0.63 | Example |
| 26 | D | 630 | 0.1 | × | 520 | 10.5 | O | 0.027 | 0.030 | × | 0.001 | 0.009 | 781 | 500 | 0.64 | Comparative Example |
| 27 | D | 630 | 1.0 | O | 520 | 11.6 | O | 0.052 | 0.058 | O | 0.005 | 0.005 | 800 | 530 | 0.66 | Example |
| 28 | D | 670 | 1.0 | O | 520 | 10.8 | O | 0.071 | 0.060 | O | 0.004 | 0.007 | 806 | 540 | 0.67 | Example |
| 29 | E | 700 | 2.0 | × | 520 | 11.6 | × | 0.092 | 0.081 | × | 0.008 | 0.009 | 791 | 490 | 0.62 | Comparative Example |
| 30 | F | 600 | 1.0 | O | 480 | 9.3 | O | 0.053 | 0.066 | O | 0.001 | 0.004 | 998 | 710 | 0.71 | Example |
| 31 | F | 600 | 0.1 | O | 480 | 10.9 | O | 0.050 | 0.063 | O | 0.001 | 0.009 | 988 | 630 | 0.64 | Example |
| 32 | G | 680 | 2.0 | O | 560 | 12.3 | O | 0.100 | 0.113 | O | 0.008 | 0.004 | 1005 | 620 | 0.62 | Example |
| 33 | G | 640 | 2.0 | × | 540 | 7.0 | × | 0.015 | 0.031 | × | 0.016 | 0.023 | 988 | 560 | 0.57 | Comparative Example |
| 34 | G | 650 | 1.0 | × | 550 | 10.9 | × | 0.030 | 0.051 | × | 0.008 | 0.002 | 981 | 670 | 0.68 | Comparative Example |
| 35 | H | 700 | 2.0 | O | 570 | 12.7 | O | 0.080 | 0.050 | O | 0.007 | 0.003 | 978 | 650 | 0.66 | Example |
| 37 | I | 680 | 0.1 | O | 530 | 14.6 | O | 0.068 | 0.084 | O | 0.003 | 0.004 | 1211 | 830 | 0.69 | Example |
| 38 | J | 640 | 1.0 | O | 530 | 11.0 | O | 0.075 | 0.089 | O | 0.002 | 0.005 | 1202 | 850 | 0.71 | Example |
| 39 | J | 680 | 0.5 | O | 520 | 10.0 | O | 0.059 | 0.070 | O | 0.003 | 0.004 | 1197 | 830 | 0.69 | Example |
| 40 | K | 600 | 0.5 | O | 510 | 10.5 | O | 0.069 | 0.101 | O | 0.003 | 0.008 | 1212 | 780 | 0.64 | Example |

Underlined items are outside the scope of the present invention.

*1: $T \geq 58.65 \cdot [Si] + 29440 \cdot [B] - 13.59 \cdot [O_2] + 548.1$: O
$T < 58.65 \cdot [Si] + 29440 \cdot [B] - 13.59 \cdot [O_2] + 548.1$: ×
[Si], [B]: amounts of Si and B in steel on mass% basis.
[$O_2$]: $O_2$ concentration on volume percent basis in atmosphere inside oxidation furnace

As apparent from Table 4, the galvanized steel sheets (Examples) produced by the present invention method have good coating adhesiveness, good coating appearance, and good fatigue resistance although they are high-strength steel sheets containing Si, Mn, and B. In contrast, galvanized steel sheets (Comparative Examples) produced outside the scope of the present invention method have poor coating adhesiveness, poor coating appearance, and/or poor fatigue resistance.

Industrial Applicability

A high-strength galvanized steel sheet according to the present invention has good coating adhesiveness and good fatigue resistance and can be used as a coated steel sheet in order to decrease the weight of automobile bodies and increase their strength.

**Claims**

1. A method for producing a high-strength galvanized steel sheet, comprising;
   oxidizing a steel sheet containing Si, Mn, and B at a heating the steel sheet temperature of T°C that satisfies formula below,
   reduction-annealing the oxidized base steel sheet, and
   galvanizing the reduction-annealed base steel sheet.

$$T \geq 58.65 \times [Si] + 29440 \times [B] - 13.59 \times [O_2] + 548.1$$

   [Si]: content of Si in the base steel sheet on a mass percent basis
   [B]: content of B in the base steel sheet on a mass percent basis
   [$O_2$]: $O_2$ concentration on a volume percent basis in an atmosphere at oxidizing treatment

2. The method for producing a high-strength galvanized steel sheet according to Claim 1, further comprising; after galvanizing, performing an alloying treatment at a temperature of 460°C to 600°C for 10 to 60 seconds.

3. The method for producing a high-strength galvanized steel sheet according to Claim 1 or 2, wherein the base steel sheet has a composition consisting of, on a mass percent basis, C: 0.01 to 0.20%, Si: 0.1 to 2.0%, Mn: 1.0 to 3.0%, B: 0.0005 to 0.005%, and the balance being Fe and unavoidable impurities.

4. A high-strength galvanized steel sheet produced by the method according to Claim 1 or 3,

wherein, in the base steel sheet surface layer having a thickness of 5 $\mu$m under the coating layer, an amount of Si oxides is 0.05 g/m$^2$ or more on a Si basis and an amount of Mn oxides is 0.05 g/m$^2$ or more on a Mn basis.

5. A high-strength galvanized steel sheet produced by the method according to Claim 2 or 3, wherein, in the coating layer, an amount of Si oxides is 0.05 g/m$^2$ or more on a Si basis and an amount of Mn oxides is 0.05 g/m$^2$ or more on a Mn basis, and in the base steel sheet surface layer having a thickness of 5 $\mu$m under the coating layer, an amount of Si oxides is 0.01 g/m$^2$ or less on a Si basis and an amount of Mn oxides is 0.01 g/m$^2$ or less on a Mn basis.

# FIG. 1

## INTERNATIONAL SEARCH REPORT

| International application No. |
| --- |
| PCT/JP2014/001108 |

**A. CLASSIFICATION OF SUBJECT MATTER**
$C23C2/02$(2006.01)i, $C21D1/76$(2006.01)i, $C21D9/46$(2006.01)i, $C22C38/00$ (2006.01)i, $C22C38/04$(2006.01)i, $C23C2/06$(2006.01)i, $C23C2/28$(2006.01)i, $C22C18/04$(2006.01)n, $C22C38/58$(2006.01)n
According to International Patent Classification (IPC) or to both national classification and IPC

**B. FIELDS SEARCHED**

Minimum documentation searched (classification system followed by classification symbols)
C23C2/02, C21D1/76, C21D9/46, C22C38/00, C22C38/04, C23C2/06, C23C2/28, C22C18/04, C22C38/58

Documentation searched other than minimum documentation to the extent that such documents are included in the fields searched
Jitsuyo Shinan Koho          1922–1996   Jitsuyo Shinan Toroku Koho   1996–2014
Kokai Jitsuyo Shinan Koho    1971–2014   Toroku Jitsuyo Shinan Koho   1994–2014

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y<br>A | JP 2013-014834 A  (JFE Steel Corp.),<br>24 January 2013 (24.01.2013),<br>claims; paragraphs [0008] to [0012], [0047] to [0055], [0066] to [0103]<br>& WO 2012/169653 A1      & TW 201303078 A | 1,2,4,5<br>2<br>3 |
| X<br>Y | JP 2011-127216 A  (Kobe Steel, Ltd.),<br>30 June 2011 (30.06.2011),<br>paragraphs [0010], [0011], [0051] to [0068], [0079], [0094] to [0112]<br>(Family: none) | 1,3-5<br>2 |
| X<br>Y | JP 2011-117063 A  (Kobe Steel, Ltd.),<br>16 June 2011 (16.06.2011),<br>paragraphs [0008], [0009], [0053] to [0068], [0082], [0091] to [0123]<br>(Family: none) | 1,3-5<br>2 |

[X] Further documents are listed in the continuation of Box C.   [ ] See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 12 May, 2014 (12.05.14) | 27 May, 2014 (27.05.14) |

| Name and mailing address of the ISA/<br>    Japanese Patent Office | Authorized officer |
| --- | --- |
| Facsimile No. | Telephone No. |

Form PCT/ISA/210 (second sheet) (July 2009)

**INTERNATIONAL SEARCH REPORT**

International application No.

PCT/JP2014/001108

C (Continuation).   DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2011-214042 A  (Kobe Steel, Ltd.),<br>27 October 2011 (27.10.2011),<br>paragraphs [0010], [0044] to [0057], [0091] to [0110]<br>(Family: none) | 1,3,5<br>2<br>4 |
| X<br>A | JP 2011-026674 A  (JFE Steel Corp.),<br>10 February 2011 (10.02.2011),<br>claim 1; paragraphs [0008], [0014] to [0023], [0040] to [0050]<br>(Family: none) | 4<br>1-3,5 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 55122865 A
- JP 4202630 A
- JP 4202631 A
- JP 4202632 A
- JP 4202633 A
- JP 4254531 A
- JP 4254532 A
- JP 7034210 A
- JP 2006233333 A
- JP 2007211280 A
- JP 2008184642 A